# EUROPEAN PATENT APPLICATION

(11) **EP 4 694 404 A1**
(43) Date of publication of application: **11.02.2026**
(21) Application number: 24784407.9
(22) Date of filing: 03.04.2024
(51) Int. Cl.: H04W 56/00

(54) **METHOD AND APPARATUS FOR PROCESSING CHANGE IN TIMING SYNCHRONIZATION STATE, AND DEVICE AND STORAGE MEDIUM**

(30) Priority: 07.04.2023 CN 202310373083
(71) Applicant: Vivo Mobile Communication Co., Ltd., Dongguan, Guangdong 523863 (CN)
(72) Inventor: LI, Yuan, Dongguan, Guangdong 523863 (CN); ZHANG, Yanxia, Dongguan, Guangdong 523863 (CN); MO, Yitao, Dongguan, Guangdong 523863 (CN); YANG, Xiaodong, Dongguan, Guangdong 523863 (CN)
(74) Representative: Shieldmark
(86) International application number: PCT/CN2024/086033
(87) International publication number: WO 2024/208325

(57) **Abstract**

This application discloses a timing synchronization status change processing method and apparatus, a device, and a storage medium, and pertains to the field of communication technologies. The timing synchronization status change processing method in embodiments of this application includes: An access network device sends first information to a terminal in a case that a timing synchronization status of a network side changes, where the first information is used to indicate that the timing synchronization status of the network side changes.

## Description

This application claims priority to Chinese Patent Application No. 202310373083.8, filed with the China National Intellectual Property Administration on April 7, 2023 and entitled "TIMING SYNCHRONIZATION STATUS CHANGE PROCESSING METHOD AND APPARATUS, DEVICE, AND STORAGE MEDIUM", which is incorporated herein by reference in its entirety.

### TECHNICAL FIELD

This application pertains to the field of communication technologies, and specifically relates to a timing synchronization status change processing method and apparatus, a device, and a storage medium.

### BACKGROUND

Ultra-reliable low-latency communication (Ultra-Reliable Low-Latency Communication, URLLC) is a special use case for cellular communication, and includes a set of functions for low-latency and high-reliable applications, including mission-critical applications, for example, industrial automation, autonomous driving vehicles, smart grids, smart transportation/freight, and augmented/virtual reality or telemedicine or industrial processes. A target of URLLC is to enable features and network functions of URLLC to operate under ultra-high reliability standards.

To implement URLLC, timing of entities in a fifth-generation mobile communication technology (Fifth-generation, 5G) system network needs to be synchronized. When different timing synchronization sources are involved or different interference is encountered, a timing synchronization status of a network side may change. However, in a related technology, a terminal still runs based on an original timing synchronization status. Consequently, a terminal having a synchronization requirement, an application running in the terminal, or a device connected to the terminal; and an application function (Application Function, AF) cannot keep synchronization with a 5G system (5G System, 5GS).

### SUMMARY

Embodiments of this application provide a timing synchronization status change processing method and apparatus, a device, and a storage medium. This resolves a problem that in a case that a timing synchronization status of a network side changes, a terminal cannot learn of the change.

According to a first aspect, a timing synchronization status change processing method is provided. The method includes:

An access network device sends first information to a terminal in a case that a timing synchronization status of a network side changes, where
the first information is used to indicate that the timing synchronization status of the network side changes.

According to a second aspect, a timing synchronization status change processing method is provided. The method includes:

A terminal receives first information from an access network device, where
the first information is used to indicate that a timing synchronization status of a network side changes.

According to a third aspect, a timing synchronization status change processing apparatus is provided. The apparatus includes:
a first sending module, configured to send first information to a terminal in a case that a timing synchronization status of a network side changes, where
the first information is used to indicate that the timing synchronization status of the network side changes.

According to a fourth aspect, a timing synchronization status change processing apparatus is provided. The apparatus includes:
a first receiving module, configured to receive first information from an access network device, where
the first information is used to indicate that a timing synchronization status of a network side changes.

According to a fifth aspect, a network side device is provided. The network side device includes a processor and a memory, and the memory stores a program or an instruction that is executable on the processor; and when the program or the instruction is executed by the processor, the steps of the method according to the first aspect are implemented.

According to a sixth aspect, a network side device is provided. The network side device includes a processor and a communication interface. The communication interface is configured to send first information to a terminal in a case that a timing synchronization status of a network side changes, where the first information is used to indicate that the timing synchronization status of the network side changes.

According to a seventh aspect, a terminal is provided. The terminal includes a processor and a memory, and the memory stores a program or an instruction that is executable on the processor; and when the program or the instruction is executed by the processor, the steps of the method according to the second aspect are implemented.

According to an eighth aspect, a terminal is provided. The terminal includes a processor and a communication interface. The communication interface is configured to receive first information from an access network device, where the first information is used to indicate that a timing synchronization status of a network side changes.

According to a ninth aspect, a readable storage medium is provided. The readable storage medium stores a program or an instruction; and when the program or the instruction is executed by a processor, the steps of the method according to the first aspect are implemented, or the steps of the method according to the second aspect are implemented.

According to a tenth aspect, a wireless communication system is provided. The system includes a terminal and a network side device. The terminal may be configured to perform the steps of the method according to the second aspect, and the network side device may be configured to perform the steps of the method according to the first aspect.

According to an eleventh aspect, a chip is provided. The chip includes a processor and a communication interface, the communication interface is coupled to the processor, and the processor is configured to run a program or an instruction, to implement the method according to the first aspect or the method according to the second aspect.

According to a twelfth aspect, a computer program/program product is provided. The computer program/program product is stored in a storage medium, and the program/program product is executed by at least one processor, to implement the method according to the first aspect or the method according to the second aspect.

In the embodiments of this application, in a case that the timing synchronization status of the network side changes, the access network device can send the first information to the terminal, where the first information is used to indicate that the timing synchronization status of the network side changes. It may be learned that in the embodiments of this application, if the timing synchronization status of the network side changes, the access network device may notify the terminal of the change. This resolves the problem that the terminal cannot learn of the change in a case that the timing synchronization status of the network side changes.

### BRIEF DESCRIPTION OF DRAWINGS

FIG. 1 is a block diagram of a wireless communication system to which embodiments of this application are applicable;
FIG. 2 is a flowchart of a timing synchronization status change processing method according to an embodiment of this application;
FIG. 3 is a flowchart of another timing synchronization status change processing method according to an embodiment of this application;
FIG. 4 is a flowchart of a specific implementation for a timing synchronization status change according to an embodiment of this application;
FIG. 5 is a block diagram of a structure of a timing synchronization status change processing apparatus according to an embodiment of this application;
FIG. 6 is a block diagram of a structure of another timing synchronization status change processing apparatus according to an embodiment of this application;
FIG. 7 is a block diagram of a structure of a communication device according to an embodiment of this application;
FIG. 8 is a block diagram of a structure of a terminal according to an embodiment of this application; and
FIG. 9 is a block diagram of a structure of a network side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application shall fall within the protection scope of this application.

The terms "first", "second", and the like in this application are used to distinguish between similar objects, instead of describing a specific order or sequence. It should be understood that the terms used in such a way are interchangeable in proper circumstances, so that the embodiments of this application can be implemented in an order other than the order illustrated or described herein. Objects classified by "first" and "second" are usually of a same type, and a quantity of objects is not limited. For example, there may be one or more first objects. In addition, "or" in this application represents at least one of connected objects. For example, "A or B" covers three solutions. To be specific, in a solution 1, A is included but B is not included; in a solution 2, B is included but A is not included; and in a solution 3, both A and B are included. The character "/" usually indicates an "or" relationship between associated objects.

The term "indication" in this application may be either a direct indication (or an explicit indication) or an indirect indication (or an implicit indication). The direct indication may be understood as that a sender explicitly notifies a receiver of content such as specific information, an operation that needs to be performed, or a request result in a sent indication. The indirect indication may be understood as that the receiver determines corresponding information based on an indication sent by the sender, or performs determining and determines an operation that needs to be performed, a request result, or the like based on a determining result.

It should be noted that the technologies described in the embodiments of this application are not limited to a long term evolution (Long Term Evolution, LTE)/LTE-advanced (LTE-Advanced, LTE-A) system, and may also be used in other wireless communication systems such as a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, a single-carrier frequency division multiple access (Single-carrier Frequency Division Multiple Access, SC-FDMA) system, or another system. The terms "system" and "network" in the embodiments of this application may be used interchangeably. The technologies described can be applied to both the systems and the radio technologies mentioned above as well as to other systems and radio technologies. A new radio (New Radio, NR) system is described in the following descriptions for illustrative purposes, and the NR terminology is used in most of the following descriptions, although these technologies can also be applied to a system other than the NR system, for example, a 6^{th} generation (6^{th} Generation, 6G) communication system.

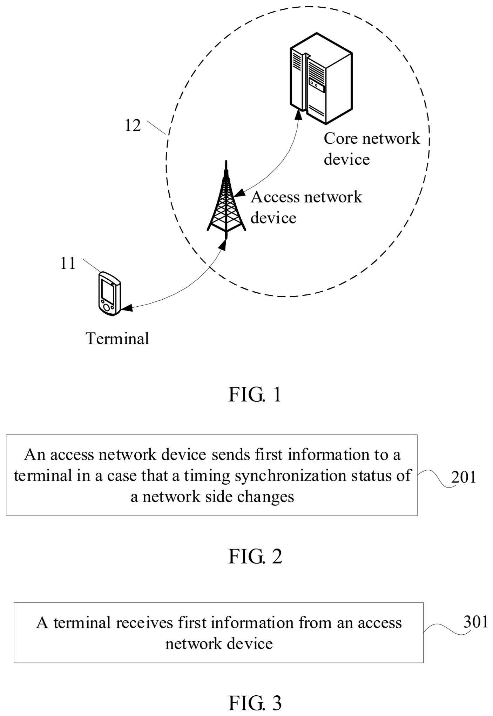

FIG. 1 is a block diagram of a wireless communication system to which the embodiments of this application are applicable. The wireless communication system includes a terminal 11 and a network side device 12. The terminal 11 may be a terminal side device, for example, a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile internet device (Mobile Internet Device, MID), an augmented reality (Augmented Reality, AR) device, a virtual reality (Virtual Reality, VR) device, a robot, a wearable device (Wearable Device), a flight vehicle (flight vehicle), vehicle user equipment (Vehicle User Equipment, VUE), maritime user equipment, pedestrian user equipment (Pedestrian User Equipment, PUE), a smart home (a home device having a wireless communication function, for example, a refrigerator, a television, a washing machine, or furniture), a game console, a personal computer (Personal Computer, PC), a teller machine, or a self-service machine. The wearable device includes a smart watch, a smart band, a smart headset, smart glasses, smart jewelry (a smart bangle, a smart bracelet, a smart ring, a smart necklace, a smart anklet, a smart anklet chain, and the like), a smart wrist strap, smart clothes, and the like. A vehicle-mounted device may also be referred to as a vehicle-mounted terminal, a vehicle-mounted controller, a vehicle-mounted module, a vehicle-mounted component, a vehicle-mounted chip, or a vehicle-mounted unit. It should be noted that a specific type of the terminal 11 is not limited in the embodiments of this application. The network side device 12 may include an access network device or a core network device. The access network device may also be referred to as a radio access network (Radio Access Network, RAN) device, a radio access network function, or a radio access network unit. The access network device may include a base station, a wireless local area network (Wireless Local Area Network, WLAN) access point (Access Point, AS), a wireless fidelity (Wireless Fidelity, Wi-Fi) node, or the like. The base station may be referred to as a NodeB (NodeB, NB), an evolved NodeB (Evolved NodeB, eNB), a next generation NodeB (the next generation NodeB, gNB), a new radio NodeB (New Radio NodeB, NR NodeB), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home NodeB (home NodeB, HNB), a home evolved NodeB (home evolved NodeB), a transmission reception point (Transmission Reception Point, TRP), or another appropriate term in the field. Provided that same technical effect is achieved, the base station is not limited to a specified technical term. It should be noted that in the embodiments of this application, only a base station in an NR system is used as an example for description, and a specific type of the base station is not limited.

The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function unit (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF or L-NEF), a binding support function (Binding Support Function, BSF), an application function (Application Function, AF), and the like. It should be noted that, in the embodiments of this application, only a core network device in an NR system is used as an example for description, and a specific type of the core network device is not limited.

The following describes in detail the timing synchronization status change processing method provided in the embodiments of this application by using some embodiments and application scenarios thereof with reference to the accompanying drawings.

First, to facilitate understanding of the timing synchronization status change processing method in the embodiments of this application, the following related technologies are described:
1. Transmission of timing synchronization information on a side of the core network device

If the AF requests access spectrum time synchronization (Access Spectrum Time Synchronization, ASTI) of the terminal, the AF provides clock quality reporting control information (clock quality reporting control information) and service acceptance criteria (service acceptance criteria, defined according to the following attributes: a time source, coordinated universal time (Coordinated Universal Time, UTC) traceability or global navigation satellite system (Global Navigation Satellite System, GNSS) traceability, a synchronization status, clock precision, a clock level, and frequency stability) to a time sensitive communication time synchronization function (Time Sensitive communication Time Synchronization function, TSCTSF). The TSCTSF provides the clock quality reporting control information to the AMF. Further, the AMF provides clock quality reporting control information for each terminal to the access network device.

The clock quality reporting control information is used to indicate how the access network device notifies the terminal of clock quality information (Clock quality information).

### 2. System Information Block (System Information Block, SIB) 9

A system information block broadcast by the base station includes information related to global positioning system (Global Positioning System, GPS) time and coordinated universal time, and the terminal may use a parameter provided in the system information block to obtain current UTC, GPS, and local time corresponding to the base station.

According to a first aspect, an embodiment of this application provides a timing synchronization status change processing method. As shown in FIG. 2, the method may include the following step 201:
Step 201: An access network device sends first information to a terminal in a case that a timing synchronization status of a network side changes.

The first information is used to indicate that the timing synchronization status (timing synchronization status) on the network side changes. It may be understood that the first information may indicate, in an explicit manner, that the timing synchronization status of the network side changes, or may indicate, in an implicit manner, that the timing synchronization status of the network side changes.

In addition, when the access network device locally detects that an event affecting timing synchronization occurs, or when receiving clock quality control information sent by a core network device, the access network device may determine that the timing synchronization status of the network side changes. In this case, the access network device may send the first information to the terminal, to notify the terminal of the change.

It may be learned from step 201 that, in this embodiment of this application, in a case that the timing synchronization status of the network side changes, the access network device can send the first information to the terminal, where the first information is used to indicate that the timing synchronization status of the network side changes. It may be learned that in this embodiment of this application, if the timing synchronization status of the network side changes, the access network device may notify the terminal of the change. This resolves a problem that the terminal cannot learn of the change in a case that the timing synchronization status of the network side changes.

Optionally, the first information includes at least one of the following A-1 to A-3:
A-1: a change indication on broadcast signaling, where broadcast signaling includes an updated timing synchronization status reporting identifier (optionally, the broadcast signaling includes system information);
A-2: a change indication on timing synchronization status reporting; and
A-3: the broadcast signaling.

For A-1, if the timing synchronization status changes, the timing synchronization status reporting identifier is updated (that is, changes). Therefore, if the broadcast signaling includes the updated timing synchronization status reporting identifier, the broadcast signaling changes when the timing synchronization status changes. It should be noted herein that the broadcast signaling further includes content other than the updated timing synchronization status reporting identifier. Therefore, whether the timing synchronization status changes cannot be determined by using only the change indication on broadcast signaling.

A-2 indicates that the access network device may directly notify the terminal of the change of the timing synchronization status of the network side by using the timing synchronization status change indication.

A-3 indicates that the access network device may send the updated timing synchronization status reporting identifier to the terminal by using the broadcast signaling. In this way, the terminal compares a locally stored timing synchronization status reporting identifier with the timing synchronization status reporting identifier in the broadcast signaling. Therefore, it may be determined whether the timing synchronization status of the network side changes (to be specific, if the two identifiers are inconsistent, the timing synchronization status of the network side changes; or if the two identifiers are consistent, the timing synchronization status of the network side does not change).

It should be noted herein that regardless of whether the terminal is in a connected state or a non-connected state, the terminal may monitor the broadcast signaling, to obtain the updated timing synchronization status reporting identifier carried in the broadcast signaling.

Optionally, B-1: At least one of the change indication on broadcast signaling and the change indication on timing synchronization status reporting is carried in a short message (optionally, the broadcast signaling includes system information).

B-2: In a case that the first information includes the broadcast signaling, the short message does not include at least one of the change indication on broadcast signaling and the change indication on timing synchronization status reporting.

When the system information of the access network device changes, the access network device may notify, by using the short message (Short message), a terminal in coverage of the access network device that the system information changes, and send the changed system information in a next change period.

In addition, a structure of the short message may be shown in Table 1. It may be learned from Table 1 that a first bit of the short message is used to indicate the change of the system information. Therefore, the first bit of the short message may be used as the foregoing broadcast signaling change indication. Fifth to eighth bits of the short message are reserved bits. Therefore, at least one of the fifth to eighth bits of the short message may be selected as the foregoing timing synchronization status reporting change indication.

**Table 1 Short message**

| Bit (Bit) | Short message |
|---|---|
| 1 | System information modification (systemInfoModification) (a value 1 indicates a BCCH is modified, other than a SIB 6, a SIB 7, and a SIB 8) |
| 2 | ETWS and CMAS indication (etwsAndCmasIndication) (a value 1 indicates: at least one of an earthquake and tsunami warning system (Earthquake and Tsunami Warning System, ETWS) primary notification, an ETWS secondary notification, a commercial mobile alert service (Commercial Mobile Alert Service, CMAS) notification) |
| 3 | Stop paging monitoring (stopPagingMonitoring) |
| 4 | eDRX system information modification (systemInfoModification-eDRX) |
| 5 to 8 | Reserved bits |

In addition, it may also be protocol-agreed that "the short message does not carry the change indication on broadcast signaling and the change indication on timing synchronization status reporting", that is, it may be protocol-agreed that "the change of the timing synchronization status of the network side does not cause the change of the short message". In this case, the terminal may obtain the timing synchronization status reporting identifier by monitoring the broadcast signaling (for example, the system information), to determine, based on the timing synchronization status reporting identifier carried in the broadcast signaling (for example, the system information), whether the timing synchronization status of the network side changes.

It may be understood that, when the timing synchronization status of the network side changes, the access network device may send a timing synchronization status report only by using the broadcast signaling; or may send a timing synchronization status report by using the broadcast signaling, and also change a corresponding bit in the short message to indicate a change of the system and a change of the timing synchronization status report.

Optionally, the method further includes:
The access network device sends updated clock quality information to the terminal in a connected state.

The access network device may provide, based on clock quality reporting control information from the core network device and a capability of the access network device, clock quality information for the terminal in a radio resource control connected state (RRC_CONNECTED). Herein, the clock quality information is used to indicate the timing synchronization status of the network side.

It may be understood that the access network device does not send the clock quality information to the terminal in a non-connected state (for example, RRC_IDLE or RRC_INACTIVE).

Optionally, the updated clock quality information is carried in dedicated radio resource control signaling. Optionally, the radio resource control signaling includes at least one of an RRC reconfiguration message and a DL information transfer message. That is, the access network device may send, to the terminal, at least one of the RRC reconfiguration message and the DL transfer message carrying the clock quality information.

In this embodiment of this application, the terminal in the non-connected state cannot receive the clock quality information sent by the access network device, but may receive the broadcast signaling (for example, the system information) of the access network device, so that the terminal determines, based on the timing synchronization status reporting identifier included in the broadcast signaling, that the timing synchronization status of the network side changes, and then can initiate an RRC connection resume procedure; and after an RRC connection is resumed, requests current clock quality information on the network side from the access network device. In this way, the timing synchronization status is updated based on the current clock quality information on the network side.

Optionally, the method further includes at least one of the following C-1 to C-3:
C-1: The access network device sends second information to the terminal in the connected state, where the second information is used to indicate execution logic in a case that the terminal receives the updated timing synchronization status reporting identifier and the updated clock quality information.
C-2: The access network device receives a target request from the terminal, and sends current clock quality information on the network side to the terminal in response to the target request, where the target request is used to request the clock quality information on the network side.
C-3: The access network device sends target configuration information to the terminal, where the target configuration information is used to indicate a periodicity in which the terminal monitors the broadcast signaling, and the broadcast signaling includes the updated timing synchronization status reporting identifier.

For C-1, it indicates that the access network device may further indicate logic that needs to be executed in a case that the terminal can receive the updated timing synchronization status reporting identifier and the updated clock quality information, that is, indicate the terminal how to use the received updated timing synchronization status reporting identifier and the received updated clock quality information.

Optionally, the second information is carried in dedicated radio resource control signaling. The radio resource control signaling may include an RRC reconfiguration message and a DL information transfer (DL Information transfer) message.

Herein, optionally, the execution logic includes one of the following D-1 and D-2:
D-1: first logic, where the first logic is used to indicate that: in a case that the terminal receives the updated timing synchronization status reporting identifier and the updated clock quality information, the terminal requests current clock quality information on the network side from the access network device when and only when the terminal has a timing synchronization requirement; and
D-2: second logic, where the second logic is used to indicate that: when the terminal receives the updated timing synchronization status reporting identifier, the terminal requests the current clock quality information on the network side from the access network device.

It should be noted herein that, if the terminal can receive the updated timing synchronization status reporting identifier and the updated clock quality information, but cannot determine whether a timing synchronization status indicated by the received updated timing synchronization status reporting identifier is consistent with that indicated by the received updated clock quality information. Therefore, the access network device may further indicate, by using the second information (namely, the first logic or the second logic), the terminal how to use the received updated timing synchronization status reporting identifier and the received updated clock quality information.

The first logic indicates that if the terminal can receive the updated timing synchronization status reporting identifier and the updated clock quality information, the terminal may not use the clock quality information first (that is, maintain current timing synchronization, and do not update the timing synchronization status based on the clock quality information), but request the current clock quality information on the network side from the access network device in a case that there is a timing synchronization requirement.

The second logic indicates that if the terminal first receives the updated clock quality information and then receives the updated timing synchronization status reporting identifier, the terminal may not use the clock quality information first (that is, maintain current timing synchronization, and do not update the timing synchronization status based on the clock quality information), but requests the current clock quality information on the network side from the access network device. Further, when the received timing synchronization status identifier is inconsistent with a locally maintained timing synchronization status reporting identifier, the terminal may request the current clock quality information on the network side from the access network device.

For D-2, it indicates that the terminal may request the current clock quality information on the network side from the access network device by using the target request. Optionally, the target request is carried in at least one of the following:
UE assistance information; and
a new radio resource control message.

For D-3, it indicates that the access network device may further configure, for the terminal, a monitoring periodicity of the broadcast signaling related to positioning synchronization, so that the terminal can monitor the broadcast signaling based on the periodicity; and when detecting the broadcast signaling, obtain the updated timing synchronization status reporting identifier from the broadcast signaling. The broadcast signaling may be system information.

Optionally, the target configuration information is carried in at least one of the following:
a radio resource control release message; and
a radio resource control reconfiguration message.

According to a second aspect, an embodiment of this application provides a timing synchronization status change processing method. As shown in FIG. 3, the method includes the following step 301:
Step 301: A terminal receives first information from an access network device, where
the first information is used to indicate that a timing synchronization status of a network side changes. It may be understood that the first information may indicate, in an explicit manner, that the timing synchronization status of the network side changes, or may indicate, in an implicit manner, that the timing synchronization status of the network side changes.

In addition, when the access network device locally detects that an event affecting timing synchronization occurs, or when receiving clock quality control information sent by a core network device, the access network device may determine that the timing synchronization status of the network side changes. In this case, the access network device may send the first information to the terminal, to notify the terminal of the change.

It may be learned from step 301 that, in this embodiment of this application, in a case that the timing synchronization status of the network side changes, the access network device can send the first information to the terminal, where the first information is used to indicate that the timing synchronization status of the network side changes. It may be learned that in this embodiment of this application, if the timing synchronization status of the network side changes, the access network device may notify the terminal of the change. This resolves a problem that the terminal cannot learn of the change in a case that the timing synchronization status of the network side changes.

Optionally, the first information includes at least one of the following A-1 to A-3:
A-1: a change indication on broadcast signaling, where broadcast signaling includes an updated timing synchronization status reporting identifier (optionally, the broadcast signaling includes system information);
A-2: a change indication on timing synchronization status reporting; and
A-3: the broadcast signaling.

Herein, for related descriptions of A-1 to A-3, refer to the foregoing descriptions, and details are not described herein again.

Optionally, B-1: At least one of the change indication on broadcast signaling and the change indication on timing synchronization status reporting is carried in a short message (optionally, the broadcast signaling includes system information).

B-2: In a case that the first information includes the broadcast signaling, the short message does not include at least one of the change indication on broadcast signaling and the change indication on timing synchronization status reporting.

Herein, for related descriptions of B-1 and B-2, refer to the foregoing descriptions, and details are not described herein again.

Optionally, the method further includes:
In a case that the terminal is in a connected state, the terminal receives updated clock quality information from the access network device.

The access network device may provide, based on clock quality reporting control information from the core network device and a capability of the access network device, clock quality information for the terminal in a radio resource control connected state (RRC_CONNECTED).

It may be understood that the access network device does not send the clock quality information to the terminal in a non-connected state (for example, RRC_IDLE or RRC_INACTIVE).

Optionally, the updated clock quality information is carried in dedicated radio resource control signaling. Optionally, the radio resource control signaling includes at least one of an RRC reconfiguration message and a DL information transfer message. That is, the access network device may send, to the terminal, at least one of the RRC reconfiguration message and the DL information transfer message carrying the clock quality information.

Optionally, the method further includes:
In a case that the terminal is in a non-connected state, the terminal compares a locally stored timing synchronization status reporting identifier with the received updated timing synchronization status reporting identifier; and in a case that the two identifiers are inconsistent, initiates a radio resource control connection resume procedure;
the terminal sends a target request to the access network device after a radio link control connection of the terminal is resumed, where the target request is used to request clock quality information on the network side;
the terminal receives the current clock quality information on the network side from the access network device; and
the terminal updates the timing synchronization status based on the current clock quality information on the network side.

It may be learned that in this embodiment of this application, the terminal in the non-connected state cannot receive the clock quality information sent by the access network device, but may receive the broadcast signaling (for example, the system information) of the access network device, so that the terminal determines, based on the timing synchronization status reporting identifier included in the broadcast signaling, that the timing synchronization status of the network side changes, and then can initiate an RRC connection resume procedure; and after an RRC connection is resumed, requests current clock quality information on the network side from the access network device. In this way, the timing synchronization status is updated based on the current clock quality information on the network side.

Optionally, the method further includes:
In a case that the terminal is in the connected state, the receives second information from the access network device, where the second information is used to indicate execution logic in a case that the terminal receives the updated timing synchronization status reporting identifier and the updated clock quality information.

It may be learned that the access network device may further indicate logic that needs to be executed in a case that the terminal can receive the updated timing synchronization status reporting identifier and the updated clock quality information, that is, indicate the terminal how to use the received updated timing synchronization status reporting identifier and the received updated clock quality information.

Optionally, the execution logic includes one of the following D-1 and D-2:
D-1: first logic, where the first logic is used to indicate that: in a case that the terminal receives the updated timing synchronization status reporting identifier and the updated clock quality information, the terminal requests current clock quality information on the network side from the access network device when and only when the terminal has a timing synchronization requirement; and
D-2: second logic, where the second logic is used to indicate that: when the terminal receives the updated timing synchronization status reporting identifier, the terminal requests the current clock quality information on the network side from the access network device.

It should be noted herein that, if the terminal can receive the updated timing synchronization status reporting identifier and the updated clock quality information, but cannot determine whether a timing synchronization status indicated by the received updated timing synchronization status reporting identifier is consistent with that indicated by the received updated clock quality information. Therefore, the access network device may further indicate, by using the second information (namely, the first logic or the second logic), the terminal how to use the received updated timing synchronization status reporting identifier and the received updated clock quality information.

Optionally, the method further includes:
In a case that the terminal is in the connected state, and receives the updated timing synchronization status reporting identifier and the updated clock quality information, the execution logic includes the first logic, and the terminal has the timing synchronization requirement, or in a case that the terminal is in the connected state, and receives the updated timing synchronization status reporting identifier, and the execution logic includes the second logic, the terminal sends a target request to the access network device, where the target request is used to request clock quality information on the network side;
the terminal receives the current clock quality information on the network side from the access network device; and
the terminal updates the timing synchronization status based on the current clock quality information on the network side.

It may be learned that if the second information includes the first logic, and the terminal can receive the updated timing synchronization status reporting identifier and the updated clock quality information, the terminal may not use the clock quality information first (that is, maintain current timing synchronization, and do not update the timing synchronization status based on the clock quality information), but request the current clock quality information on the network side from the access network device in a case that there is a timing synchronization requirement.

If the second information includes the second logic, and the terminal first receives the updated clock quality information and then receives the updated timing synchronization status reporting identifier, the terminal may not use the clock quality information first (that is, maintain current timing synchronization, and do not update the timing synchronization status based on the clock quality information), but requests the current clock quality information on the network side from the access network device. Further, when the received timing synchronization status identifier is inconsistent with a locally maintained timing synchronization status reporting identifier, the terminal may request the current clock quality information on the network side from the access network device.

Optionally, the method further includes:
In a case that the terminal does not receive the second information, and receives the updated timing synchronization status reporting identifier and the updated clock quality information, the terminal updates the timing synchronization status based on the received updated clock quality information.

It may be learned that if the terminal is in the connected state but unsuccessfully receives the second information sent by the access network device, in a case that the updated timing synchronization status reporting identifier and the updated clock quality information are received, the terminal may update the timing synchronization status based on the received updated clock quality information (that is, directly use the received updated clock quality information).

Optionally, the second information is carried in dedicated radio resource control signaling. The radio resource control signaling may include at least one of an RRC reconfiguration message and a DL information transfer message.

Optionally, the target request is carried in at least one of the following:
UE assistance information; and
a new radio resource control message.

Optionally, the method further includes:
The terminal receives target configuration information from the access network device, where the target configuration information is used to indicate a periodicity in which the terminal monitors the broadcast signaling, and the broadcast signaling includes the updated timing synchronization status reporting identifier; and
the terminal monitors the broadcast signaling based on the target configuration information.

It may be learned that the access network device may further configure, for the terminal, a monitoring periodicity of the broadcast signaling related to positioning synchronization, so that the terminal can monitor the broadcast signaling based on the periodicity; and when detecting the broadcast signaling, obtain the updated timing synchronization status reporting identifier from the broadcast signaling. The broadcast signaling may be system information.

Optionally, the target configuration information is carried in one of the following indications:
a radio resource control release message; and
a radio resource control reconfiguration message.

It may be learned from the content described in the first aspect and the second aspect that, in this embodiment of this application, the network side may notify the terminal of the timing synchronization status change in a system information change manner; and the terminal may also be configured by the network to periodically monitor a SIB 9 to obtain the timing synchronization status (in this case, the network is not required to page the terminal by using a short message, to be specific, a timing synchronization status reporting ID change is allowed, but no short message is triggered for a system information change). In addition, in this embodiment of this application, a manner in which the network indicates the timing synchronization status change by using the short message is provided; and in this embodiment of this application, the network side may further configure the terminal in the connected state to implement that dedicated signaling reporting content (namely, the clock quality information) is overwritten by system information reporting content (namely, the timing synchronization status reporting identifier), to request the clock quality information from the network when there is a timing synchronization requirement.

In conclusion, a specific implementation of the timing synchronization status change processing method in this embodiment of this application may be as follows:
Implementation 1: indicating the change of the timing synchronization status by using the short message includes the following steps E-1 and E-2:
Step E-1: The access network device receives a new timing synchronization status report (sent by the core network device), and updates a timing synchronization status reporting ID in the broadcast signaling.

The timing synchronization status reporting ID is used to indicate that all terminals in coverage of the access network device have the new timing synchronization status report. The broadcast signaling may be a system information block 9 (SIB 9).

Step E-2: The access network device sends a first message, where the first message may be a short message sent in a paging manner, and is used to notify the terminal of the first information.

The first information may be at least one of the following:
a system information change indication (that is, a first bit of a short msg bitmap is 1); and
a timing synchronization status reporting update indication (that is, one bit is selected from fifth to eighth bits of the short msg; and if the bit is set to 1, it indicates that there is a new timing synchronization status report).

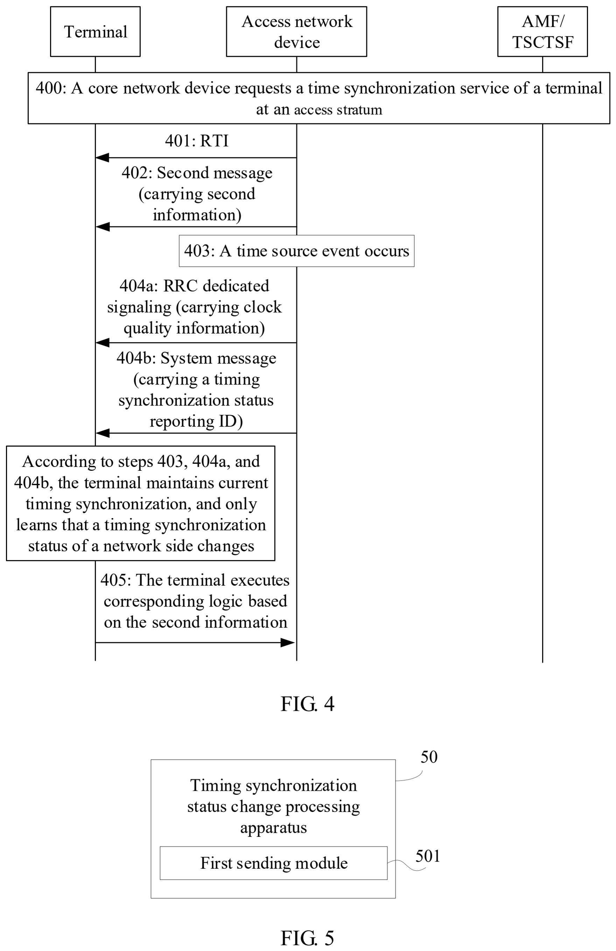

Implementation 2: As shown in FIG. 4, the following steps 400 to 405 are included.

Step 400: A core network device requests a time synchronization service of a terminal at an access stratum.

Step 401: An access network device sends reference time information (Reference Time Information, RTI) to the terminal in a connected state, where the reference time information is used to indicate time information on a network side.

The access network device may send the RTI to the terminal by using a SIB 9 or dedicated RRC signaling.

Step 402: The access network device sends a second message to the terminal, where the second message is used to transmit second information.

The second information is used to indicate execution logic in a case that the terminal receives an updated timing synchronization status reporting identifier and updated clock quality information.

In addition, the second message may be dedicated RRC signaling. The dedicated RRC signaling may be an RRC reconfiguration (RRC Reconfiguration) message.

In addition, the foregoing execution logic may be at least one of the following:
first logic, where the first logic is used to indicate that: in a case that the terminal receives the updated timing synchronization status reporting identifier and the updated clock quality information, the terminal requests current clock quality information on the network side from the access network device when and only when the terminal has a timing synchronization requirement; and
second logic, where the second logic is used to indicate that: when the terminal receives the updated timing synchronization status reporting identifier, the terminal requests the current clock quality information on the network side from the access network device; and herein, after obtaining new clock quality information, the terminal automatically releases the second information.

Step 403: A time source event occurs, to be specific, the access network device locally detects occurrence of an event that affects timing synchronization or receives clock quality control information from the core network device.

Step 404a: The access network device sends the clock quality information to the terminal by using dedicated RRC signaling.

Step 404b: The access network device notifies the terminal of a timing synchronization status report ID by using a system message.

Step 405: The terminal executes corresponding logic based on the second information.

To be specific, in a case that the terminal is in the connected state, and receives the updated timing synchronization status reporting ID and the updated clock quality information, the execution logic includes the first logic, and the terminal has the timing synchronization requirement, or in a case that the terminal is in the connected state, and receives the updated timing synchronization status reporting ID, the execution logic includes the second logic, and a timing synchronization status ID received by the terminal is inconsistent with a locally maintained timing synchronization status reporting ID, the terminal sends a target request to the access network device, where the target request is used to request clock quality information on the network side;
the terminal receives the current clock quality information on the network side from the access network device; and
the terminal updates the timing synchronization status based on the current clock quality information on the network side.

The target request is carried by a third message. The third message may be at least one of the following:
UE assistance information (UE Assistance Information, UAI); and
a new RRC message, for example, a clock quality request message.

In addition, in a case that the terminal does not receive the second information, and receives the updated timing synchronization status reporting ID and the updated clock quality information, the terminal updates the timing synchronization status based on the received updated clock quality information.

Particularly, the terminal in a non-connected state may obtain the timing synchronization status reporting ID by reading a system message; after comparison with the locally maintained timing synchronization status reporting ID, learns that a new timing synchronization status can be obtained, and initiates an RRC resume procedure; and after the RRC connection is resumed, may request the current clock quality information on the network side from the access network device, and then update the timing synchronization status based on the requested clock quality information at this time.

In addition, on the basis of the foregoing implementation 1 and implementation 2, the following step may be further included.

The access network device sends a fourth message to the terminal, where the fourth message is used to send target configuration information. The target configuration information is used to indicate a periodicity in which the terminal monitors the broadcast signaling, and the broadcast signaling includes the updated timing synchronization status reporting ID.

After receiving the target configuration information, the terminal may monitor, based on the target configuration information, the broadcast signaling related to timing synchronization.

The fourth message may be at least one of the following:
an RRC release (RRC Release) message; and
an RRC reconfiguration (RRC Reconfiguration) message.

In conclusion, the terminal in the RRC_CONNECTED state may receive the clock quality information from the network side, or learn of the change of the broadcast signaling by using the short message; and further read the broadcast signaling to learn of the change of the timing synchronization status, and obtain the clock quality information from the network side in a case that there is a timing synchronization requirement.

The terminal in the RRC_INACTIVE/IDLE state may learn, by reading the broadcast signaling, that the timing synchronization status changes, and then trigger resume or establishment of an RRC connection, to obtain the clock quality information from the network side.

Therefore, in this embodiment of this application, it can be ensured that the terminal can obtain the clock quality information regardless of whether the terminal maintains a connection to the network (that is, regardless of whether the RRC connection is established).

The timing synchronization status change processing method provided in the embodiments of this application may be performed by a timing synchronization status change processing apparatus. In the embodiments of this application, that the timing synchronization status change processing apparatus performs the timing synchronization status change processing method is used as an example to describe the timing synchronization status change processing apparatus provided in the embodiments of this application.

According to a third aspect, an embodiment of this application provides a timing synchronization status change processing apparatus. The apparatus may be used in an access network device. As shown in FIG. 5, the timing synchronization status change processing apparatus 50 may include the following module:
a first sending module 501, configured to send first information to a terminal in a case that a timing synchronization status of a network side changes, where
the first information is used to indicate that the timing synchronization status of the network side changes.

Optionally, the first information includes at least one of the following:
a change indication on broadcast signaling, where broadcast signaling includes an updated timing synchronization status reporting identifier;
a change indication on timing synchronization status reporting; and
the broadcast signaling.

Optionally, at least one of the change indication on broadcast signaling and the change indication on timing synchronization status reporting is carried in a short message; or
in a case that the first information includes the broadcast signaling, the short message does not include at least one of the change indication on broadcast signaling and the change indication on timing synchronization status reporting.

Optionally, the apparatus further includes:
a second sending module, configured to send updated clock quality information to the terminal in a connected state.

Optionally, the updated clock quality information is carried in dedicated radio resource control signaling.

Optionally, the apparatus further includes at least one of the following modules:
a third sending module, configured to send second information to the terminal in the connected state, where the second information is used to indicate execution logic in a case that the terminal receives the updated timing synchronization status reporting identifier and the updated clock quality information;
a second receiving module, configured to: receive a target request from the terminal, and send current clock quality information on the network side to the terminal in response to the target request, where the target request is used to request the clock quality information on the network side; and
a fourth sending module, configured to send target configuration information to the terminal, where the target configuration information is used to indicate a periodicity in which the terminal monitors the broadcast signaling, and the broadcast signaling includes the updated timing synchronization status reporting identifier.

Optionally, the execution logic includes one of the following:
first logic, where the first logic is used to indicate that: in a case that the terminal receives the updated timing synchronization status reporting identifier and the updated clock quality information, the terminal requests the current clock quality information on the network side from the access network device when and only when the terminal has a timing synchronization requirement; and
second logic, where the second logic is used to indicate that: when the terminal receives the updated timing synchronization status reporting identifier, the terminal requests the current clock quality information on the network side from the access network device.

Optionally, the second information is carried in dedicated radio resource control signaling.

Optionally, the target request is carried in at least one of the following:
UE assistance information; and
a new radio resource control message.

Optionally, the target configuration information is carried in at least one of the following:
a radio resource control release message; and
a radio resource control reconfiguration message.

Optionally, the broadcast signaling includes system information.

Optionally, the dedicated radio resource control signaling includes at least one of a radio resource control reconfiguration message and a DL information transfer message.

The timing synchronization status change processing apparatus in this embodiment of this application may be an electronic device, for example, an electronic device with an operating system, or may be a component in the electronic device, for example, an integrated circuit or a chip. The electronic device may be an access network device. For example, the terminal may include but is not limited to the foregoing listed types of the access network device. This is not specifically limited in this embodiment of this application.

The timing synchronization status change processing apparatus provided in this embodiment of this application can implement the processes implemented in the method embodiment in FIG. 2, and same technical effect can be achieved. To avoid repetition, details are not described herein again.

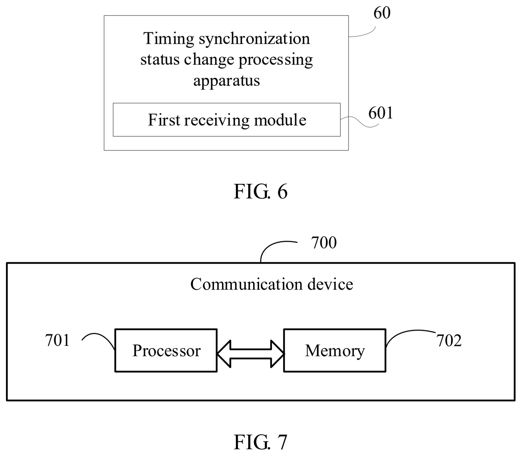

According to a fourth aspect, an embodiment of this application provides a timing synchronization status change processing apparatus. The apparatus may be used in a terminal. As shown in FIG. 6, the timing synchronization status change processing apparatus 60 may include the following module:
a first receiving module 601, configured to receive first information from an access network device, where
the first information is used to indicate that a timing synchronization status of a network side changes.

Optionally, the first information includes at least one of the following:
a change indication on broadcast signaling, where broadcast signaling includes an updated timing synchronization status reporting identifier;
a change indication on timing synchronization status reporting; and
the broadcast signaling.

Optionally, at least one of the change indication on broadcast signaling and the change indication on timing synchronization status reporting is carried in a short message; or
in a case that the first information includes the broadcast signaling, the short message does not include at least one of the change indication on broadcast signaling and the change indication on timing synchronization status reporting.

Optionally, the apparatus further includes:
a third receiving module, configured to: in a case that the terminal is in a connected state, receive updated clock quality information from the access network device.

Optionally, the updated clock quality information is carried in dedicated radio resource control signaling.

Optionally, the apparatus further includes:
a comparison module, configured to: in a case that the terminal is in a non-connected state, compare a locally stored timing synchronization status reporting identifier with the received updated timing synchronization status reporting identifier; and in a case that the two identifiers are inconsistent, initiate a radio resource control connection resume procedure;
a first request module, configured to send a target request to the access network device after a radio link control connection of the terminal is resumed, where the target request is used to request clock quality information on the network side;
a fourth receiving module, configured to receive the current clock quality information on the network side from the access network device; and
a first updating module, configured to update the timing synchronization status based on the current clock quality information on the network side.

Optionally, the apparatus further includes:
a fifth receiving module, configured to: in a case that the terminal is in the connected state, receive second information from the access network device, where the second information is used to indicate execution logic in a case that the terminal receives the updated timing synchronization status reporting identifier and the updated clock quality information.

Optionally, the execution logic includes one of the following:
first logic, where the first logic is used to indicate that: in a case that the terminal receives the updated timing synchronization status reporting identifier and the updated clock quality information, the terminal requests current clock quality information on the network side from the access network device when and only when the terminal has a timing synchronization requirement; and
second logic, where the second logic is used to indicate that: when the terminal receives the updated timing synchronization status reporting identifier, the terminal requests the current clock quality information on the network side from the access network device.

Optionally, the apparatus further includes:
a second request module, configured to: in a case that the terminal is in the connected state, and receives the updated timing synchronization status reporting identifier and the updated clock quality information, the execution logic includes the first logic, and the terminal has the timing synchronization requirement, or in a case that the terminal is in the connected state, and receives the updated timing synchronization status reporting identifier, and the execution logic includes the second logic, send a target request to the access network device, where the target request is used to request clock quality information on the network side;
a sixth receiving module, configured to receive the current clock quality information on the network side from the access network device; and
a second updating module, configured to update the timing synchronization status based on the current clock quality information on the network side.

Optionally, the apparatus further includes:
a third updating module, configured to: in a case that the terminal does not receive the second information, and receives the updated timing synchronization status reporting identifier and the updated clock quality information, update the timing synchronization status based on the received updated clock quality information.

Optionally, the second information is carried in dedicated radio resource control signaling.

Optionally, the target request is carried in at least one of the following:
UE assistance information; and
a new radio resource control message.

Optionally, the apparatus further includes:
a seventh receiving module, configured to receive, by terminal, target configuration information from the access network device, where the target configuration information is used to indicate a periodicity in which the terminal monitors the broadcast signaling, and the broadcast signaling includes the updated timing synchronization status reporting identifier; and
a monitoring module, configured to monitor the broadcast signaling based on the target configuration information.

Optionally, the target configuration information is carried in one of the following indications:
a radio resource control release message; and
a radio resource control reconfiguration message.

Optionally, the broadcast signaling includes system information.

Optionally, the dedicated radio resource control signaling includes at least one of a radio resource control reconfiguration message and a DL information transfer message.

The timing synchronization status change processing apparatus in this embodiment of this application may be an electronic device, for example, an electronic device with an operating system, or may be a component in the electronic device, for example, an integrated circuit or a chip. The electronic device may be a terminal. For example, the terminal may include but is not limited to the foregoing listed types of the terminal 11. This is not specifically limited in this embodiment of this application.

The timing synchronization status change processing apparatus provided in this embodiment of this application can implement the processes implemented in the method embodiment in FIG. 3, and same technical effect can be achieved. To avoid repetition, details are not described herein again.

As shown in FIG. 7, an embodiment of this application further provides a communication device 700. The communication device 700 includes a processor 701 and a memory 702, and the memory 702 stores a program or an instruction that is executable on the processor 701. For example, when the communication device 700 is a terminal, and the program or the instruction is executed by the processor 701, the steps of the embodiment of the timing synchronization status change processing method according to the first aspect are implemented, and same technical effect can be achieved. When the communication device 700 is a network side device, and the program or the instruction is executed by the processor 701, the steps of the embodiment of the timing synchronization status change processing method according to the second aspect are implemented, and same technical effect can be achieved. To avoid repetition, details are not described herein again.

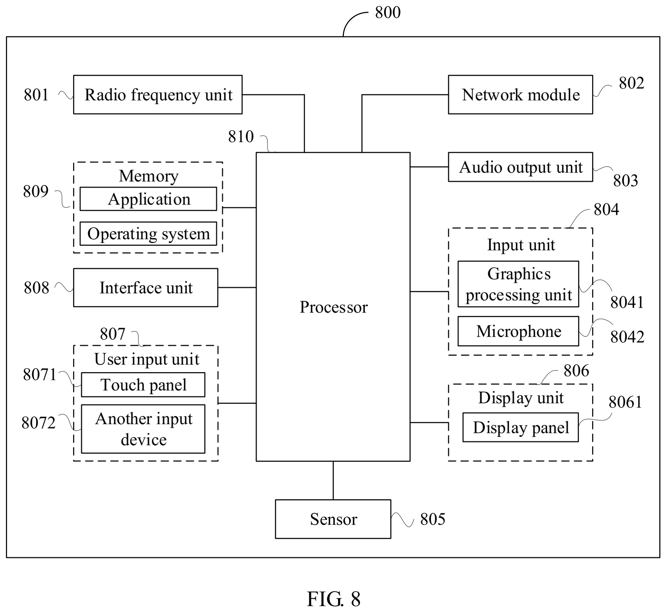

An embodiment of this application further provides a terminal. The terminal includes a processor and a communication interface, the communication interface is coupled to the processor, and the processor is configured to run a program or an instruction, to implement the steps of the method embodiment shown in FIG. 3. The terminal embodiment corresponds to the foregoing method embodiment on the terminal side, each implementation process and implementation of the foregoing method embodiment can be applied to the terminal embodiment, and same technical effect can be achieved. Specifically, FIG. 8 is a schematic diagram of a hardware structure of a terminal according to an embodiment of this application.

The terminal 800 includes but is not limited to at least a part of components such as a radio frequency unit 801, a network module 802, an audio output unit 803, an input unit 804, a sensor 805, a display unit 806, a user input unit 807, an interface unit 808, a memory 809, and a processor 810.

A person skilled in the art can understand that the terminal 800 may further include a power supply (such as a battery) that supplies power to each component. The power supply may be logically connected to the processor 810 by using a power supply management system, to implement functions such as charging and discharging management, and power consumption management by using the power supply management system. The terminal structure shown in FIG. 8 constitutes no limitation on the terminal, and the terminal may include more or fewer components than those shown in the figure, or combine some components, or have different component arrangements. Details are not described herein.

It should be understood that in this embodiment of this application, the input unit 804 may include a graphics processing unit (Graphics Processing Unit, GPU) 8041 and a microphone 8042. The graphics processing unit 8041 processes image data of a static picture or a video obtained by an image capture apparatus (for example, a camera) in a video capture mode or an image capture mode. The display unit 806 may include a display panel 8061, and the display panel 8061 may be configured in a form of a liquid crystal display, an organic light-emitting diode, or the like. The user input unit 807 includes at least one of a touch panel 8071 and another input device 8072. The touch panel 8071 is also referred to as a touchscreen. The touch panel 8071 may include two parts: a touch detection apparatus and a touch controller. The another input device 8072 may include but is not limited to a physical keyboard, a functional button (such as a volume control button or a power on/off button), a trackball, a mouse, and a joystick. Details are not described herein.

In this embodiment of this application, after receiving downlink data from a network side device, the radio frequency unit 801 may transmit the downlink data to the processor 810 for processing. In addition, the radio frequency unit 801 may send uplink data to the network side device. Usually, the radio frequency unit 801 includes but is not limited to an antenna, an amplifier, a transceiver, a coupler, a low noise amplifier, a duplexer, and the like.

The memory 809 may be configured to store a software program or an instruction and various data. The memory 809 may mainly include a first storage area for storing a program or an instruction and a second storage area for storing data. The first storage area may store an operating system, and an application or an instruction required by at least one function (for example, a sound playing function or an image playing function). In addition, the memory 809 may include a volatile memory or a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 809 in this embodiment of this application includes but is not limited to these memories and any memory of another proper type.

The processor 810 may include one or more processing units. Optionally, an application processor and a modem processor are integrated into the processor 810. The application processor mainly processes an operating system, a user interface, an application, and the like. The modem processor mainly processes a wireless communication signal, for example, a baseband processor. It may be understood that, alternatively, the modem processor may not be integrated into the processor 810.

The radio frequency unit 801 is configured to receive first information from an access network device, where
the first information is used to indicate that a timing synchronization status of a network side changes.

Optionally, the first information includes at least one of the following:
a change indication on broadcast signaling, where broadcast signaling includes an updated timing synchronization status reporting identifier;
a change indication on timing synchronization status reporting; and
the broadcast signaling.

Optionally, at least one of the change indication on broadcast signaling and the change indication on timing synchronization status reporting is carried in a short message; or
in a case that the first information includes the broadcast signaling, the short message does not include at least one of the change indication on broadcast signaling and the change indication on timing synchronization status reporting.

Optionally, the radio frequency unit 801 is further configured to:
in a case that the terminal is in a connected state, receive updated clock quality information from the access network device.

Optionally, the updated clock quality information is carried in dedicated radio resource control signaling.

Optionally, the processor 810 is configured to: in a case that the terminal is in a non-connected state, compare a locally stored timing synchronization status reporting identifier with the received updated timing synchronization status reporting identifier; and in a case that the two identifiers are inconsistent, initiate a radio resource control connection resume procedure;
the radio frequency unit 801 is further configured to:
send a target request to the access network device after a radio link control connection of the terminal is resumed, where the target request is used to request clock quality information on the network side; and
receive the current clock quality information on the network side from the access network device; and
the processor 810 is configured to update the timing synchronization status based on the current clock quality information on the network side.

Optionally, the radio frequency unit 801 is further configured to: in a case that the terminal is in the connected state, receive second information from the access network device, where the second information is used to indicate execution logic in a case that the terminal receives the updated timing synchronization status reporting identifier and the updated clock quality information.

Optionally, the execution logic includes one of the following:
first logic, where the first logic is used to indicate that: in a case that the terminal receives the updated timing synchronization status reporting identifier and the updated clock quality information, the terminal requests current clock quality information on the network side from the access network device when and only when the terminal has a timing synchronization requirement; and
second logic, where the second logic is used to indicate that: when the terminal receives the updated timing synchronization status reporting identifier, the terminal requests the current clock quality information on the network side from the access network device.

Optionally, the radio frequency unit 801 is further configured to:
in a case that the terminal is in the connected state, and receives the updated timing synchronization status reporting identifier and the updated clock quality information, the execution logic includes the first logic, and the terminal has the timing synchronization requirement, or in a case that the terminal is in the connected state, and receives the updated timing synchronization status reporting identifier, and the execution logic includes the second logic, send a target request to the access network device, where the target request is used to request clock quality information on the network side; and
receive the current clock quality information on the network side from the access network device; and
the processor 810 is further configured to update the timing synchronization status based on the current clock quality information on the network side.

Optionally, the processor 810 is further configured to:
in a case that the terminal does not receive the second information, and receives the updated timing synchronization status reporting identifier and the updated clock quality information, update the timing synchronization status based on the received updated clock quality information.

Optionally, the second information is carried in dedicated radio resource control signaling.

Optionally, the target request is carried in at least one of the following:
UE assistance information; and
a new radio resource control message.

Optionally, the radio frequency unit 801 is further configured to: receive target configuration information from the access network device, where the target configuration information is used to indicate a periodicity in which the terminal monitors the broadcast signaling, and the broadcast signaling includes the updated timing synchronization status reporting identifier; and
the processor 810 is further configured to monitor the broadcast signaling based on the target configuration information.

Optionally, the target configuration information is carried in one of the following indications:
a radio resource control release message; and
a radio resource control reconfiguration message.

Optionally, the broadcast signaling includes system information.

Optionally, the dedicated radio resource control signaling includes at least one of a radio resource control reconfiguration message and a DL information transfer message.

It may be understood that, for an implementation process of the implementations mentioned in this embodiment, refer to related descriptions of the method embodiment according to the second aspect, and same or corresponding technical effect may be achieved. To avoid repetition, details are not described herein again.

An embodiment of this application further provides a network side device. The network side device includes a processor and a communication interface, the communication interface is coupled to the processor, and the processor is configured to run a program or an instruction, to implement the steps of the method embodiment shown in FIG. 2. The network side device embodiment corresponds to the method embodiment of the network side device, each implementation process and implementation of the method embodiment can be applied to the network side device embodiment, and same technical effect can be achieved.

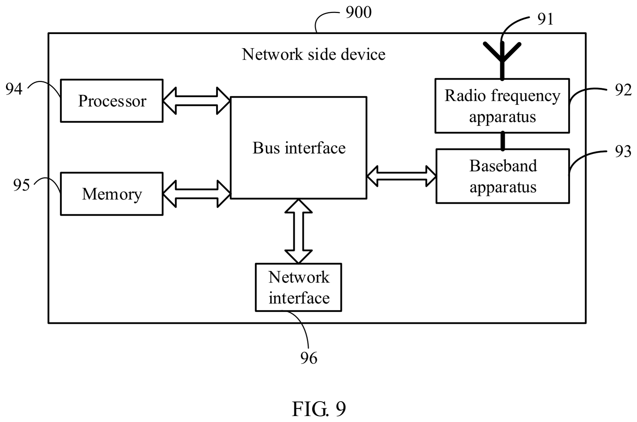

Specifically, an embodiment of this application further provides a network side device. As shown in FIG. 9, the network side device 900 includes an antenna 91, a radio frequency apparatus 92, a baseband apparatus 93, a processor 94, and a memory 95. The antenna 91 is connected to the radio frequency apparatus 92. In an uplink direction, the radio frequency apparatus 92 receives information through the antenna 91, and sends the received information to the baseband apparatus 93 for processing. In a downlink direction, the baseband apparatus 93 processes information that needs to be sent, and sends processed information to the radio frequency apparatus 92. The radio frequency apparatus 92 processes the received information, and sends processed information through the antenna 91.

In the foregoing embodiment, the method performed by the network side device may be implemented in the baseband apparatus 93. The baseband apparatus 93 includes a baseband processor.

For example, the baseband apparatus 93 may include at least one baseband board. A plurality of chips are disposed on the baseband board. As shown in FIG. 9, one chip is, for example, a baseband processor, and is connected to the memory 95 through a bus interface, to invoke a program in the memory 95 to perform the operations of the network device shown in the foregoing method embodiments.

The network side device may further include a network interface 96, and the interface is, for example, a common public radio interface (Common Public Radio Interface, CPRI).

Specifically, the network side device 900 in this embodiment of this application further includes an instruction or a program that is stored in the memory 95 and that is executable on the processor 94. The processor 94 invokes the instruction or the program in the memory 95 to perform the method performed by the modules shown in FIG. 5, and same technical effect is achieved. To avoid repetition, details are not described herein again.

An embodiment of this application further provides a readable storage medium. The readable storage medium stores a program or an instruction. When the program or the instruction is executed by a processor, the processes of the embodiment of the timing synchronization status change processing method are implemented, and same technical effect can be achieved. To avoid repetition, details are not described herein again.

The processor is a processor in the terminal in the foregoing embodiments. The readable storage medium includes a computer-readable storage medium, such as a computer read-only memory ROM, a random access memory RAM, a magnetic disk, or an optical disc. In some examples, the readable storage medium may be a non-transient readable storage medium.

An embodiment of this application further provides a chip. The chip includes a processor and a communication interface, the communication interface is coupled to the processor, the processor is configured to run a program or an instruction to implement the processes of the embodiment of the timing synchronization status change processing method, and same technical effect can be achieved. To avoid repetition, details are not described herein again.

It should be understood that the chip mentioned in this embodiment of this application may also be referred to as a system-level chip, a system chip, a chip system, or an on-chip system chip.

An embodiment of this application further provides a computer program/program product. The computer program/program product is stored in a storage medium, the computer program/program product is executed by at least one processor to implement the processes of the embodiment of the timing synchronization status change processing method, and same technical effect can be achieved. To avoid repetition, details are not described herein again.

An embodiment of this application further provides a wireless communication system. The system includes a terminal and a network side device. The terminal may be configured to perform the steps of the method according to the first aspect, and the network side device may be configured to perform the steps of the method according to the second aspect.

It should be noted that, in this specification, the term "include", "comprise", or any other variant thereof is intended to cover a non-exclusive inclusion, so that a process, a method, an article, or an apparatus that includes a list of elements not only includes those elements but also includes other elements which are not expressly listed, or further includes elements inherent to this process, method, article, or apparatus. In absence of more constraints, an element preceded by "includes a..." does not preclude the existence of other identical elements in the process, method, article, or apparatus that includes the element. In addition, it should be noted that the scope of the method and apparatus in the embodiments of this application is not limited to performing functions in the order shown or discussed, but may also include performing the functions in a basically simultaneous manner or in opposite order based on the functions involved. For example, the described method may be performed in a different order from the described order, and various steps may be added, omitted, or combined. In addition, features described with reference to some examples may be combined in other examples.

Based on the descriptions of the foregoing implementations, a person skilled in the art may clearly understand that the method in the foregoing embodiments may be implemented by using a computer software product in addition to a necessary universal hardware platform, or certainly may be implemented by hardware. The computer software product is stored in a storage medium (such as a ROM, a RAM, a magnetic disk, or an optical disc), and includes several instructions for instructing a terminal or a network side device to perform the method described in the embodiments of this application.

The embodiments of this application are described above with reference to the accompanying drawings, but this application is not limited to the foregoing specific implementations, and the foregoing specific implementations are only illustrative and not restrictive. Under the enlightenment of this application, a person of ordinary skill in the art can make many forms of implementations without departing from the purpose of this application and the protection scope of the claims, all of the implementations fall within the protection of this application.

## Claims

1. A timing synchronization status change processing method, comprising:
sending, by an access network device, first information to a terminal in a case that a timing synchronization status of a network side changes, wherein
the first information is used to indicate that the timing synchronization status of the network side changes.

2. The method according to claim 1, wherein the first information comprises at least one of the following:
a change indication on broadcast signaling, wherein broadcast signaling comprises an updated timing synchronization status reporting identifier;
a change indication on timing synchronization status reporting; and
the broadcast signaling.

3. The method according to claim 2, wherein at least one of the change indication on broadcast signaling and the change indication on timing synchronization status reporting is carried in a short message; or
in a case that the first information comprises the broadcast signaling, the short message does not comprise at least one of the change indication on broadcast signaling and the change indication on timing synchronization status reporting.

4. The method according to any one of claims 1 to 3, wherein the method further comprises:
sending, by the access network device, updated clock quality information to the terminal in a connected state.

5. The method according to claim 4, wherein the updated clock quality information is carried in dedicated radio resource control signaling.

6. The method according to any one of claims 1 to 5, wherein the method further comprises at least one of the following:
sending, by the access network device, second information to the terminal in the connected state, wherein the second information is used to indicate execution logic in a case that the terminal receives the updated timing synchronization status reporting identifier and the updated clock quality information;
receiving, by the access network device, a target request from the terminal, and sending current clock quality information on the network side to the terminal in response to the target request, wherein the target request is used to request the clock quality information on the network side; and
sending, by the access network device, target configuration information to the terminal, wherein the target configuration information is used to indicate a periodicity in which the terminal monitors the broadcast signaling, and the broadcast signaling comprises the updated timing synchronization status reporting identifier.

7. The method according to claim 6, wherein the execution logic comprises one of the following:
first logic, wherein the first logic is used to indicate that: in a case that the terminal receives the updated timing synchronization status reporting identifier and the updated clock quality information, the terminal requests the current clock quality information on the network side from the access network device when and only when the terminal has a timing synchronization requirement; and
second logic, wherein the second logic is used to indicate that: when the terminal receives the updated timing synchronization status reporting identifier, the terminal requests the current clock quality information on the network side from the access network device.

8. The method according to claim 6 or 7, wherein the second information is carried in dedicated radio resource control signaling.

9. The method according to claim 6, wherein the target request is carried in at least one of the following:
UE assistance information; and
a new radio resource control message.

10. The method according to claim 6, wherein the target configuration information is carried in at least one of the following:
a radio resource control release message; and
a radio resource control reconfiguration message.

11. The method according to any one of claims 2, 3, and 6, wherein the broadcast signaling comprises system information.

12. The method according to claim 5 or 8, wherein the dedicated radio resource control signaling comprises at least one of a radio resource control reconfiguration message and a DL information transfer message.

13. A timing synchronization status change processing method, comprising:
receiving, by a terminal, first information from an access network device, wherein
the first information is used to indicate that a timing synchronization status of a network side changes.

14. The method according to claim 13, wherein the first information comprises at least one of the following:
a change indication on broadcast signaling, wherein broadcast signaling comprises an updated timing synchronization status reporting identifier;
a change indication on timing synchronization status reporting; and
the broadcast signaling.

15. The method according to claim 14, wherein at least one of the change indication on broadcast signaling and the change indication on timing synchronization status reporting is carried in a short message; or
in a case that the first information comprises the broadcast signaling, the short message does not comprise at least one of the change indication on broadcast signaling and the change indication on timing synchronization status reporting.

16. The method according to any one of claims 13 to 15, wherein the method further comprises:
in a case that the terminal is in a connected state, receiving, by the terminal, updated clock quality information from the access network device.

17. The method according to claim 16, wherein the updated clock quality information is carried in dedicated radio resource control signaling.

18. The method according to claim 14 or 15, wherein the method further comprises:
in a case that the terminal is in a non-connected state, comparing, by the terminal, a locally stored timing synchronization status reporting identifier with the received updated timing synchronization status reporting identifier; and in a case that the two identifiers are inconsistent, initiating a radio resource control connection resume procedure;
sending, by the terminal, a target request to the access network device after a radio link control connection of the terminal is resumed, wherein the target request is used to request clock quality information on the network side;
receiving, by the terminal, current clock quality information on the network side from the access network device; and
updating, by the terminal, the timing synchronization status based on the current clock quality information on the network side.

19. The method according to claim 16 or 17, wherein the method further comprises:
in a case that the terminal is in the connected state, receiving, by the terminal, second information from the access network device, wherein the second information is used to indicate execution logic in a case that the terminal receives the updated timing synchronization status reporting identifier and the updated clock quality information.

20. The method according to claim 19, wherein the execution logic comprises one of the following:
first logic, wherein the first logic is used to indicate that: in a case that the terminal receives the updated timing synchronization status reporting identifier and the updated clock quality information, the terminal requests current clock quality information on the network side from the access network device when and only when the terminal has a timing synchronization requirement; and
second logic, wherein the second logic is used to indicate that: when the terminal receives the updated timing synchronization status reporting identifier, the terminal requests the current clock quality information on the network side from the access network device.

21. The method according to claim 20, wherein the method further comprises:
in a case that the terminal is in the connected state, and receives the updated timing synchronization status reporting identifier and the updated clock quality information, the execution logic comprises the first logic, and the terminal has the timing synchronization requirement, or in a case that the terminal is in the connected state, and receives the updated timing synchronization status reporting identifier, and the execution logic comprises the second logic, sending, by the terminal, a target request to the access network device, wherein the target request is used to request clock quality information on the network side;
receiving, by the terminal, the current clock quality information on the network side from the access network device; and
updating, by the terminal, the timing synchronization status based on the current clock quality information on the network side.

22. The method according to any one of claims 19 to 21, wherein the method further comprises:
in a case that the terminal does not receive the second information, and receives the updated timing synchronization status reporting identifier and the updated clock quality information, updating, by the terminal, the timing synchronization status based on the received updated clock quality information.

23. The method according to any one of claims 19 to 22, wherein the second information is carried in dedicated radio resource control signaling.

24. The method according to claim 18 or 21, wherein the target request is carried in at least one of the following:
UE assistance information; and
a new radio resource control message.

25. The method according to any one of claims 13 to 24, wherein the method further comprises:
receiving, by the terminal, target configuration information from the access network device, wherein the target configuration information is used to indicate a periodicity in which the terminal monitors the broadcast signaling, and the broadcast signaling comprises the updated timing synchronization status reporting identifier; and
monitoring, by the terminal, the broadcast signaling based on the target configuration information.

26. The method according to claim 25, wherein the target configuration information is carried in one of the following indications:
a radio resource control release message; and
a radio resource control reconfiguration message.

27. The method according to any one of claims 14, 15, and 25, wherein the broadcast signaling comprises system information.

28. The method according to claim 17 or 23, wherein the dedicated radio resource control signaling comprises at least one of a radio resource control reconfiguration message and a DL information transfer message.

29. A timing synchronization status change processing apparatus, comprising:
a first sending module, configured to send first information to a terminal in a case that a timing synchronization status of a network side changes, wherein
the first information is used to indicate that the timing synchronization status of the network side changes.

30. A timing synchronization status change processing apparatus, comprising:
a first receiving module, configured to receive first information from an access network device, wherein
the first information is used to indicate that a timing synchronization status of a network side changes.

31. A network side device, comprising a processor and a memory, wherein the memory stores a program or an instruction that is executable on the processor; and when the program or the instruction is executed by the processor, the steps of the timing synchronization status change processing method according to any one of claims 1 to 12 are implemented.

32. A terminal, comprising a processor and a memory, wherein the memory stores a program or an instruction that is executable on the processor; and when the program or the instruction is executed by the processor, the steps of the timing synchronization status change processing method according to any one of claims 13 to 28 are implemented.

33. A readable storage medium, wherein the readable storage medium stores a program or an instruction; and when the program or the instruction is executed by a processor, the steps of the timing synchronization status change processing method according to any one of claims 1 to 12 are implemented, or the steps of the timing synchronization status change processing method according to any one of claims 13 to 28 are implemented.
